(19) Europäisches Patentamt
European Patent Office
Office européen des brevets

(11) EP 0 430 049 B1

# (12) EUROPEAN PATENT SPECIFICATION

(45) Date of publication and mention
of the grant of the patent:
**06.03.1996 Bulletin 1996/10**

(51) Int Cl.6: **H04N 9/78**

(21) Application number: **90122227.3**

(22) Date of filing: **20.11.1990**

(54) **Interpolation circuit of chrominance signal of a pal color television signal**

Chrominanzsignalinterpolationsschaltung eines PAL-Farbfernsehsignals

Circuit d'interpolation de signal de chrominance pour un signal de télévision couleur du type PAL

(84) Designated Contracting States:
**DE GB**

(30) Priority: **21.11.1989 JP 300797/89**

(43) Date of publication of application:
**05.06.1991 Bulletin 1991/23**

(73) Proprietor: **HITACHI, LTD.**
**Chiyoda-ku, Tokyo 101 (JP)**

(72) Inventors:
• **Kudo, Koji**
**Akatsukicho-1-chome, Hachioji-shi (JP)**
• **Achiha, Masahiko**
**Iruma-shi (JP)**

(74) Representative:
**Strehl Schübel-Hopf Groening & Partner**
**Maximilianstrasse 54**
**D-80538 München (DE)**

(56) References cited:
**EP-A- 0 161 923**          **EP-A- 0 364 967**
**US-A- 4 870 482**

## Description

BACKGROUND OF THE INVENTION

The present invention relates to a carrier chrominance signal producing circuit for interpolating a chrominance signal of a PAL color television signal, and more particularly, to a carrier chrominance signal producing circuit for interpolating the chrominance signal required when a luminance signal and a carrier chrominance signal are separated from a signal obtained by sampling the PAL color television signal with a sampling frequency equal to four times the frequency of the chrominance subcarrier and having a phase identical with the phase of the color burst.

Generally, as well known, the PAL color television signal is composed of a composite signal of the carrier chrominance (C) signal and the luminance (Y) signal on which the carrier chrominance signal is superposed. Accordingly, it is necessary to separate the Y signal and the C signal (hereinafter referred to as "YC separation") in order to reproduce a picture by a receiver.

The C signal of the PAL color television signal is a signal obtained by orthogonally modulating two kinds of color difference signals (u signal and v signal) by the chrominance subcarrier and has a relation as follows:

$$C = u \cdot \sin 2\pi \, f_{sc} \cdot t \pm v \cdot \cos 2\pi \, f_{sc} \cdot t \qquad (1)$$

$$f_{sc} = \{284 - (1/4) + (1/625)\} f_H \qquad (2)$$

where $f_{sc}$ represents the frequency of the chrominance subcarrier, t represents time, and $f_H$ represents the horizontal scanning frequency. The sign ± of the equation (1) represents that the polarity of the v signal is inverted for each line. The equation (2) represents that the phase of the frequency $f_{sc}$ is offset by $\pi/2$ [rad] with respect to the line period and is further offset by $\pi/2$ [rad] with respect to the frame period. That is, the polarity of the C signal is inverted at a two-line period and becomes identical at a four-frame period. Further, the polarity of the C signal is inverted at a two-frame period and becomes identical at a four-line period. Accordingly, the phase relation of the C signal can be utilized to effect the YC separation by producing a difference between two lines or two frames of the PAL color television signal (only the C signal is extracted) or a sum thereof (only the Y signal is extracted).

When a television signal processing circuit including a YC separation circuit is realized, a digital signals is utilized to attain the compactness in the structure of an apparatus and the high accuracy processing thereof. In order to produce the digital signal, the television signal is sampled. The sampling frequency is generally set to four or three times the frequency of the chrominance subcarrier in view of the band of the signal and the ease in the structure of the apparatus.

The PAL color television signal is sampled with a frequency ($4f_{sc}$) equal to four times the frequency $f_{sc}$ of the chrominance subcarrier and at a position in which the phase thereof is identical with that of the color burst so that one frame difference signal or one line difference signal of the PAL color television signal can be produced to extract the C signal for each pixel.

However, it has been found by the study of the present inventors that parts of the C signal extracted from the frame difference or line difference signal are missing or come off.

Accordingly, the inventors have proposed a YC separation circuit which interpolates data missing from the obtained C signal to form the whole C signal without missing parts and removes the C signal from the color television signal to produce the Y signal (described in pages 217-218 of a collection of preprints for Lectures published in the National Convention of Institute of Television Engineers of Japan in 1989).

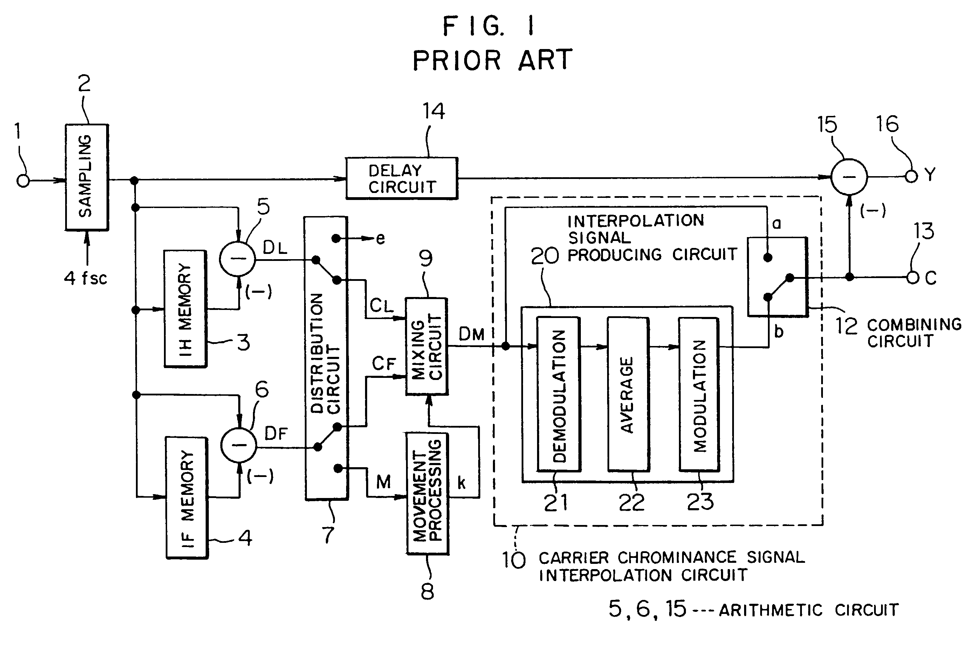

Fig. 1 shows the YC separation circuit proposed by the inventors.

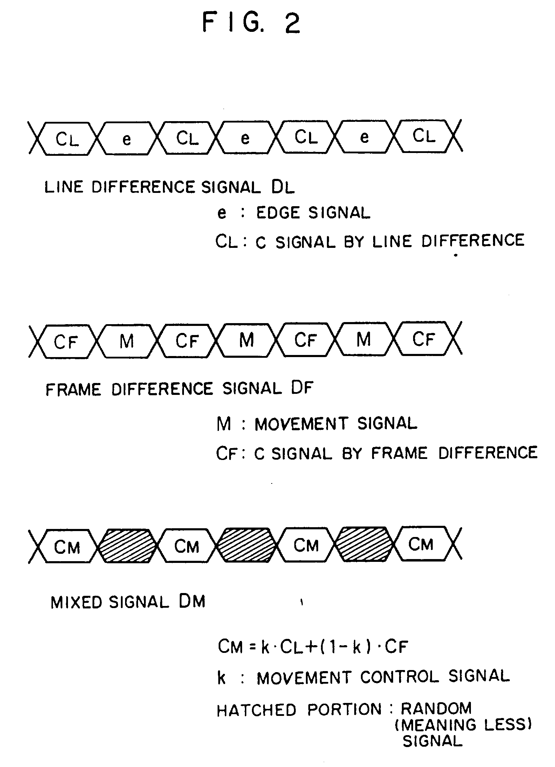

A PAL color television signal is applied to an input terminal 1 to sample the PAL color television signal by a sampling circuit 2 having an A/D (analog-to-digital) conversion function. At this time, the sampling frequency is set to $4f_{sc}$ and the phase is set to be identical with the phase of the color burst as described above. Parts of the sampled color television signal are delayed by way of a line memory 3 and a frame memory 4 by 1H (a horizontal scanning period) and 1F (a frame period), respectively. Subtraction circuits 5 and 6 are arithmetic circuits for calculating a one line difference signal $D_L$ and a one frame difference signal $D_F$, respectively. The output signals $D_L$ and $D_F$ obtained in the subtraction circuits 5 and 6 include signal components shown in Fig. 2. More particularly, the line difference signal $D_L$ is composed of a carrier chrominance signal $C_L$ and an edge signal $\underline{e}$ produced by a one line difference of the luminance signal and the two signals appear alternately at each pixel, that is, at intervals of sampling periods. Further, the frame difference signal $D_F$ is composed of a carrier chrominance signal $C_F$ and a movement signal M of a picture and the signals appear alternately at each pixel. A distribution circuit 7 divides the line difference signal $D_L$ into a first line difference signal $\underline{e}$ and a second line difference signal CL and divides the frame difference signal $D_F$ into a first frame difference signal M and a second frame difference signal $C_F$. A movement processing circuit 8 produces a movement control signal $\underline{k}$ from the movement signal M constituting the first frame difference signal. A mixing circuit 9 synthesizes a new signal $D_M$ from the carrier chrominance signals $C_L$ and $C_F$ constituting the second line difference signal and the second frame difference signal, respectively, in response to the movement control signal k. The signal $D_M$ is composed of a carrier chrominance signal $C_M$ which is processed to be fitted to movement and a hatched and meaningless random signal. Thus, a value of the carrier chrominance signal $C_M$ is calculated by the following equation (3):

$$C_M = k \cdot C_L + (1-k) \cdot C_F \qquad (3)$$

where $0 \leqq k \leqq 1$

Since the carrier chrominance signal $C_M$ is produced only at every other pixel, it is necessary to interpolate the carrier chrominance signal corresponding to the hatched portion (missing signal) and form the whole carrier chrominance signal without missing part. A carrier chrominance signal interpolating circuit 10 is a circuit for this purpose.

An interpolation signal producing circuit 20 is to produce an interpolation signal of the missing carrier chrominance signal $C_M$ and comprises a demodulation circuit 21, an average circuit 22 and a modulation circuit 23. That is, since $C_M$ is a carrier signal, the interpolation signal is required to be a carrier signal satisfying the polarity and the phase. Thus, in order to obtain the interpolation signal, the signal $D_M$ is applied to the demodulation circuit 21 and demodulated into a baseband chrominance signal to be converted into a baseband signal produced at every other pixel. The band of the baseband chrominance signal is 1.3 MHz and is a relatively low frequency component. The baseband signal is applied to the average circuit 22 to average right and left data or adjacent data of the missing chrominance signal so that the interpolation signal of the baseband signal is produced. The produced baseband signal is applied to the modulation circuit 23 and is modulated again to produce a carrier interpolation chrominance signal. The carrier interpolation chrominance signal is applied to a second input terminal b of a combining circuit 12 and the carrier chrominance signal at every other pixel is applied to a first input terminal a of the combining circuit 12 so that the terminals a and b are selected alternately to combine the whole carrier chrominance signal C.

One of the C signal produced as described above is applied to an output terminal 13 and the other one thereof is applied to an arithmetic circuit 15. The arithmetic circuit 15 subtracts the C signal from the PAL color television signal delayed by a delay circuit 14 to produce a luminance signal Y. The luminance signal Y is outputted through an output terminal 16.

In the Yc separation circuit shown in Fig. 1, since the carrier chrominance signal data produced by the one frame difference or one line difference exists only at every other pixel, it is necessary to produce the carrier chrominance signal while supplying or filling the mixing carrier chrominance signal data. However, since the interpolation signal is the carrier, the carrier chrominance signal data can not be supplied from right and left data simply. Accordingly, the carrier chrominance signal at every other pixel is demodulated into the baseband chrominance signal once (by the demodulator 21) to make interpolation in the baseband and the interpolation signal is modulated again to produce the carrier chrominance signal. Therefore, there is a problem that the circuit is complicated and a scale of a circuit is increased.

## SUMMARY OF THE INVENTION

It is an object of the present invention to provide a carrier chrominance signal producing circuit and a YC separation circuit including the carrier chrominance signal producing circuit comprising a chrominance signal interpolation circuit with good interpolation accuracy and a simple circuit configuration for producing an interpolation signal of a carrier chrominance signal without increase of a circuit scale and a YC separation circuit including the carrier chrominance producing circuit.

In order to achieve the object, the carrier chrominance signal producing circuit of the present invention comprises a chrominance signal extracting circuit for producing a difference signal generated from at least one of a one line difference and a one frame difference signal of a signal obtained by sampling a PAL color television signal with a sampling frequency equal to four times the frequency of the chrominance subcarrier and having a phase identical with the phase of the color burst, and a chrominance signal interpolating circuit including delay means for delaying said generated difference signal by one line or one frame, and a combining circuit for alternately selecting at said sampling frequency either said generated difference signal or the output of the delay means so that missing pixels occurring in said generated difference signal at every other pixel are interpolated.

Further, an arithmetic circuit which subtracts a carrier chrominance signal produced from the chrominance signal interpolation circuit from the signal obtained by sampling the PAL color television signal with the sampling frequency equal to four times the frequency of the chrominance subcarrier and having the phase identical with the phase of the color burst is added to constitute a separation circuit for separating a luminance signal and a chrominance signal of the PAL color television signal.

The one line or one frame delay means provided to supply the carrier chrominance signal which exists only at every other pixel has the same function as that of the interpolation signal producing circuit 20 described in the prior art. More particularly, the carrier chrominance signal at every other pixel delayed by one horizontal scanning period has a positional relation to the current carrier chrominance signal at every other pixel to supply missing pixels and further has a polarity identical with that of the carrier chrominance signal to be obtained. Accordingly, if the delayed signal is utilized as an interpolation signal as it is, the signal processing such as the demodulation, average and modulation is not required and simplification of a circuit and reduction of a scale can be attained.

## BRIEF DESCRIPTION OF THE DRAWINGS

Fig. 1 is a diagram of a conventional circuit for separating a luminance signal and a chrominance signal of a PAL color television signal;

Fig. 2 shows output signals produced from a main circuit portion of the separation circuit of Fig. 1;

Fig. 3 is a diagram showing a first embodiment of a separation circuit for a luminance signal and a chrominance signal of a PAL color television signal according to the present invention;

Fig. 4 shows color difference signals of the PAL color television signal and line difference signals thereof;

Fig. 5 is a diagram showing a second embodiment of a separation circuit for a luminance signal and a chrominance signal of a PAL color television signal according to the present invention; and

Fig. 6 is a diagram showing a third embodiment for a separation circuit of a luminance signal and a chrominance signal of a PAL color television signal according to the present invention.

## DESCRIPTION OF THE PREFERRED EMBODIMENTS

Embodiments of the present invention are now described in detail with reference to drawings.

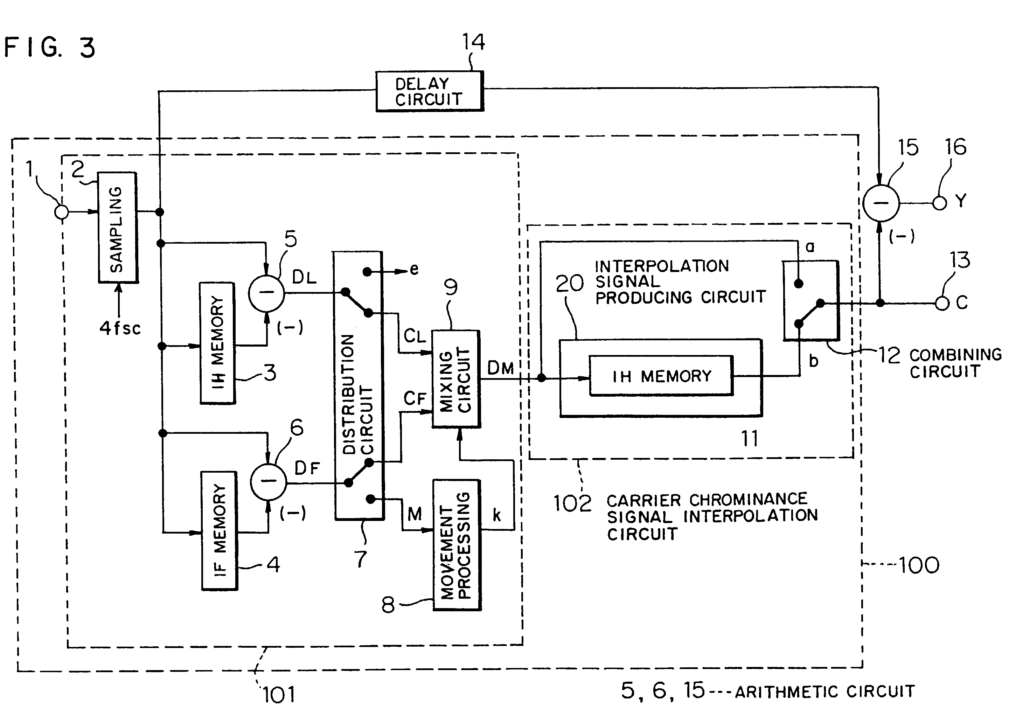

Fig. 3 shows a first embodiment of a YC separation circuit of a PAL color television signal including a chrominance signal producing circuit 100 comprising a chrominance signal extracting circuit 101 and a carrier chrominance signal interpolation circuit 102.

The PAL color television signal applied to an input terminal 101 of the chrominance signal extracting circuit 101 is sampled by a sampling circuit 2 having an A/D conversion function. The sampling frequency is equal to four times ($4f_{sc}$) the frequency $f_{sc}$ of the chrominance subcarrier and the sampling phase is identical with that of the color burst. Parts of the sampled color television signal are delayed by 1H and 1F (where H represents a horizontal scanning period and F a frame period and is 625H) through a line memory 3 and a frame memory 4, respectively. Subtraction circuits 5 and 6 are arithmetic circuits for calculating a line difference signal $D_L$ and a frame difference signal $D_F$, respectively. The line difference signal $D_L$ and the frame difference signal $D_F$ are identical with those shown in Fig. 2. The line difference signal $D_F$ is divided into a first line difference signal $e$ and a second line difference signal $C_L$ and the frame difference signal $D_F$ is divided into a frame difference signal M and a second frame difference signal $C_F$ by a distribution circuit 7. The first frame difference signal M is supplied to a movement processing circuit 8 to produce a movement control signal $k$. The second line difference signal $C_L$ and the second frame difference signal $C_F$ are supplied to a mixing circuit 9 and the mixture ratio of the signals $C_L$ and $C_F$ is controlled by the movement control signal $k$ so that a mixed signal $D_M$ combining the signals $C_L$ and $C_F$ is produced. More particularly, the mixed data $D_M$ includes high quality carrier chrominance signals $C_M$ at every other pixel which are processed to be fitted to movement. The $C_M$ signal obtained here is identical with the $C_M$ signal shown in Fig. 2. Accordingly, the carrier chrominance signal interpolation circuit 102 is required to produce the whole carrier chrominance signal with missing portions interpolated from the carrier chrominance signal $C_M$ at every other pixel.

The output signal $D_M$ of the mixed circuit 9 is applied to the first input terminal $a$ of the combining circuit 12 of the carrier chrominance signal interpolation circuit 102. At the same time, the signal $D_M$ is also applied to a line memory 11 to produce a delay signal delayed by 1H (horizontal scanning period) and the delayed signal is applied to the second input terminal $b$ of the combining circuit 12. The line memory 11 corresponds to the interpolation signal producing circuit 20 shown in Fig. 1. That is, the carrier chrominance signal for every other pixel is delayed by 1H to be used as an interpolation signal for the next line. Accordingly, the signals applied to the first and second input terminals $a$ and $b$ of the combining circuit 12 are selected alternately at a period of $1/2 f_{sc}$, the whole carrier chrominance signal C having a sampling frequency $4f_{sc}$ is synthesized on the basis of the reason described later.

The carrier chrominance signal C produced as described above is applied to an output terminal 13. Further, the carrier chrominance signal C is also supplied to the subtraction circuit 15 and is subjected to an arithmetic operation with the PAL color television signal delayed by the delay circuit 14 to produce the luminance signal Y. The luminance signal Y is outputted through the output terminal 16.

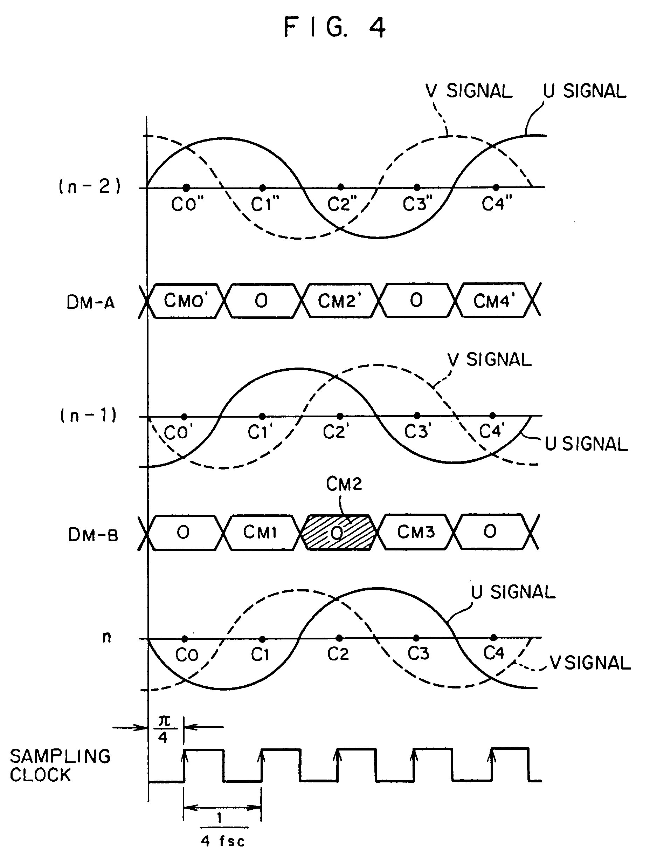

In the embodiment, the logic that the carrier chrominance signal interpolation circuit 102 produces the interpolation signal of the carrier chrominance signal $C_M$ existing only at every other pixel is now described in detail with reference to Fig. 4.

In Fig. 4, (n-2), (n-1) and $n$ represent three continuous lines in the same field and the color difference signals $u$ and $v$ modulated at this time are represented by solid line and broken line, respectively. Further, $D_{MA}$ and $D_{MB}$ represent line difference signals of the PAL color television signal sampled with a predetermined sampling clock and including five continuous pixel data. This relation is identical in the case where (n-2), (n-1) and $n$ are even in the same horizontal scanning line in three continuous frames.

Sampled values of five continuous pixels of the carrier chrominance signal in the scanning line (n-2) are given by

$$C_0{}'' = (u_0 + v_0)/\sqrt{2}, \qquad C_1{}'' = (u_1 - v_1)/\sqrt{2}$$

$$C_2{}'' = (-u_2 - v_2)/\sqrt{2}, \qquad C_3{}'' = (-u_3 + v_3)/\sqrt{2}$$

$$C_4{}'' = (u_4 + v_4)/\sqrt{2},$$

Further, the sampled values in the scanning line (n-l) are given by

$$C_0{}' = (-u_0 - v_0)/\sqrt{2}, \qquad C_1{}' = (u_1 - v_1)/\sqrt{2}$$

$$C_{2'} = (u_2+v_2)/\sqrt{2}, \qquad C_3' = (-u_3+v_3)/\sqrt{2}$$

$$C_4' = (-u_4-v_4)/\sqrt{2},$$

Similarly, the sampled values in the scanning line $\underline{n}$ are given by

$$C_o = (-uo-vo)/\sqrt{2}, \qquad C_1 = (-u_1+v_1)/\sqrt{2}$$

$$C_2 = (u_2+v_2)/\sqrt{2}, \qquad C_3 = (u_3-v_3)/\sqrt{2}$$

$$C_4 = (-u_4-v_4)/\sqrt{2},$$

When the difference signals ($D_{MA}$ and $D_{MB}$) at the continuous lines are calculated on the basis of the sampled line of the carrier chrominance signal, values of the signal $D_{MA}$ [obtained by subtracting pixels at the scanning line (n-2) from pixels at the scanning line (n-1)] are given by

first pixel:

$$C_{Mo}' = Co' - Co'' = \sqrt{2} \ (-u_o-v_o)$$

second pixel:

$$C_{M1}' = C_1' - C_1'' = 0$$

third pixel:

$$C_{M2}' = C_2' - C_2'' = \sqrt{2} \ (u_2+v_2)$$

fourth pixel:

$$C_{M3}' = C_3' - C_3'' = 0$$

fifth pixel:

$$C_{M4}' = C_4' - C_4'' = \sqrt{2} \ (-u_4-v_4)$$

In this manner, the carrier chrominance signal is obtained from the pixel having the reverse polarity relation, while since a signal is canceled in the pixel having the same polarity relation, information is not obtained. That is, the carrier chrominance signal is obtained at every other pixel. Similarly, values of the signal $D_{MB}$ [obtained by subtracting pixels at the scanning line (n-1) from pixels at the scanning line $\underline{n}$] are given by

first pixel:

$$C_{Mo} = Co - Co' = 0$$

second pixel:

$$C_{M1} = C_1 - C_1' = \sqrt{2} \ (-u_1+v_1)$$

third pixel:

$$C_{M2} = C_2 - C_2' = 0$$

fourth pixel:

$$C_{M3} = C_3 - C_3' = \sqrt{2} \ (u_3-v_3)$$

fifth pixel:

$$C_{M4} = C_4 - C_4' = 0$$

In this manner, the carrier chrominance signal for every other pixel is produced. Accordingly, in order to produce the whole carrier chrominance signal, missing data of the carrier chrominance signal for every other pixel may be supplied. However, since the signal to be interpolated is the carrier signal, it is necessary to consider the polarity of the color difference signals $\underline{u}$ and $\underline{v}$ constituting the carrier chrominance signal to be interpolated.

It is now assumed that a carrier chrominance signal data $C_{M2}$ corresponding to the pixel hatched of the line difference signal $D_{MB}$ is obtained. Since the color difference signals $\underline{u}$ and $\underline{v}$ for this data $C_{M2}$ are both positive, when color difference signals to be obtained are $u_{2x}$ and $v_{2x}$, respectively, the relation to the color difference signals $\underline{u}$ and $\underline{v}$ in the carrier chrominance signal data CM2 is given by

$$C_{M2} = \sqrt{2} \ (u_{2x} + v_{2x}) \qquad (4)$$

This equation (4) represents that at least the polarity of the signals $\underline{u}$ and $\underline{v}$ is both positive. Accordingly, it is sufficient if the interpolation signal satisfying the equation (4) is produced.

However, if attention is paid to the carrier chrominance signal data $C_{M2}'$ one line before (carrier chrominance signal data just before $C_{M2}$) for the carrier chrominance signal data $C_{M2}$, the relation of the color difference signals $\underline{u}$ and $\underline{v}$ constituting the carrier chrominance signal data $C_{M2}'$ is given by

$$C_{M2}' = \sqrt{2} \ (u_2 + v_2) \qquad (5)$$

It will be understood that the polarities of the color difference signals $\underline{u}$ and $\underline{v}$ constituting the carrier chrominance signal are identical when the equations (4) and (5) are compared. Accordingly, when judgment is made only by the polarity of the carrier chrominance signal, the carrier chrominance signal data $C_{M2}$ to be obtained can be interpolated by the carrier chrominance signal data $C_{M2}'$ one line before or just above the carrier chrominance signal data $C_{M2}$. Further, since the pixel of the carrier chrominance signal one line before has the same polarity even for other missing pixels of the carrier chrominance signal, it can be used as an interpolation signal. In addition, when attention is paid to the missing pixel of the carrier chrominance signal and the pixel of the carrier chrominance signal one line before for supplying the missing pixel, the interpolation pixel is positioned just above the missing pixel on a television screen and has a positional relation with very strong correlation. That is, they are similar signals.

Accordingly, for the carrier chrominance signal for every other pixel, the carrier chrominance signal one line before is considered to be a balanced interpolation signal satisfying the polarity and the amplitude characteristic of the carrier chrominance signal.

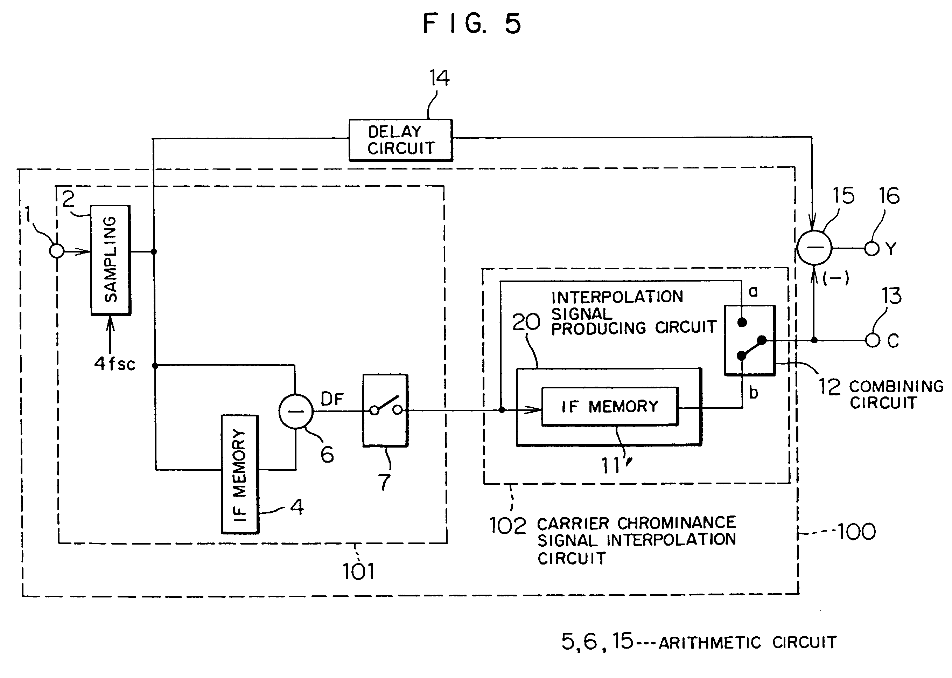

Fig. 5 shows a configuration of a second embodiment of a YC separation circuit for a PAL color television signal according to the present invention. The second embodiment is a useful circuit for a picture having less movement. The basic configuration and operational principle is the same as the first embodiment shown in Fig. 3. The different portion is that the delay means constituting the interpolation signal producing circuit 20 comprises a one-frame memory 11′ and the circuit between the sampling circuit 2 and the carrier chrominance signal interpolation circuit 102 is constituted by only the one-frame memory 4 and the arithmetic circuit 6 for producing the frame difference signal $D_F$, and the distribution circuit 7. More particularly, since the picture having less movement has strong correlation of the picture between frames, the movement detection means and the like are removed and information between frames is used.

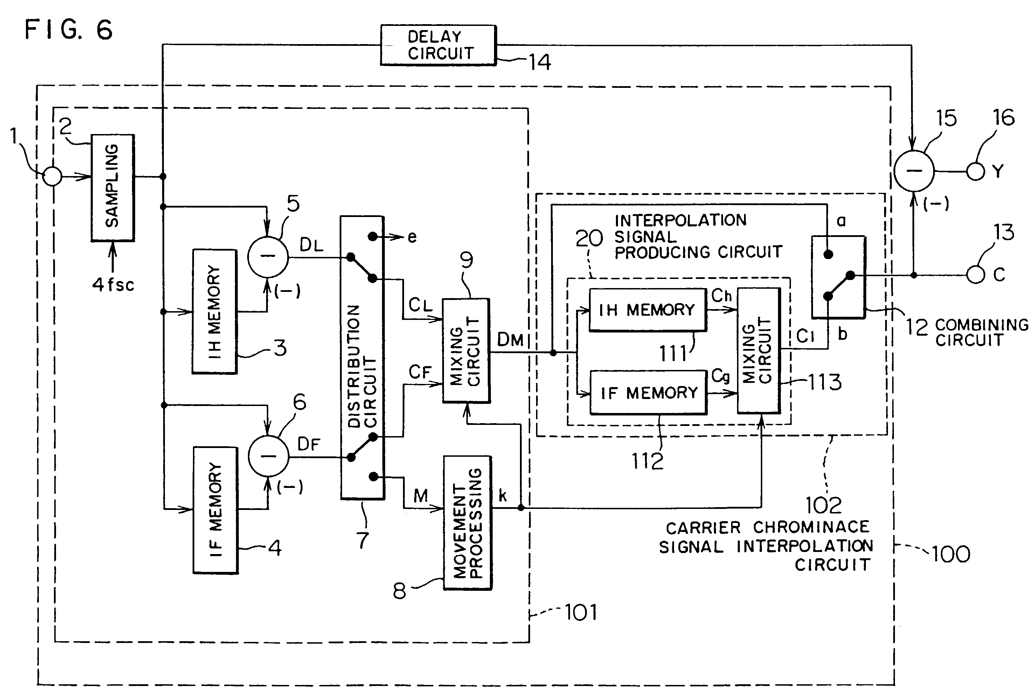

Fig. 6 shows a third embodiment of a YC separation circuit of a PAL color television signal according to the present invention. This circuit is useful for rationalization of the interpolation processing form of the carrier chrominance signal in response to movement of the picture. The basic operation and principle of this circuit is the same as the first embodiment shown in Fig. 3. The different portion is that the delay means constituting the interpolation signal producing circuit 20 comprises a one-line memory 111 and a one-frame memory 112, and a mixing circuit 113 is provided newly. The mixing circuit 113 combines an output signal $C_h$ of the one-line memory 111 and an output signal $C_g$ of the one-frame memory 112 by a movement control coefficient $\underline{k}$ of the picture as follows:

$$C_1 = k{\cdot}C_h+(1\text{-}k){\cdot}C_g \qquad (6)$$

The movement control coefficient $\underline{k}$ of the equation (6) is to be produced by the movement processing circuit 8. Further, the interpolation processing form of the interpolation signal $C_1$ is varied in accordance with movement of the picture, while when k=0 (stationary portion of the picture), $C_1=C_g$ and an ideal interpolation signal is obtained.

**Claims**

1. A carrier chrominance signal producing circuit (100) for producing a carrier chrominance signal from a difference signal generated from at least one of a one line difference and a one frame difference signal of a signal obtained by sampling a PAL color television signal with a sampling frequency equal to four times the frequency of the chrominance subcarrier and having a phase identical with the phase of the color burst, comprising a chrominance signal interpolation circuit (102) characterized by including delay means (20) for delaying said generated difference signal by one horizontal scanning period and a combining circuit (12) for alternately selecting at said sampling frequency either the input or the output signal of said delay means, whereby missing pixels of the carrier chrominance signal at every other pixel occurring in said generated difference signal are interpolated.

2. A carrier chrominance signal producing circuit (100) for producing a carrier chrominance signal from a difference signal generated from at least one of a one line difference and a one frame difference signal of a signal obtained by sampling a PAL color television signal with a sampling frequency equal to four times the frequency of the chrominance subcarrier and having a phase identical with the phase of the color burst, comprising a chrominance signal interpolation circuit (102) characterized by including delay means (20) for delaying said generated difference signal by one frame period and a combining circuit (12) for alternatingly selecting at said sampling frequency either the input or the output signal of said delay means, whereby missing pixels of the carrier chrominance signal at every other pixel occurring in said generated difference signal are interpolated.

3. A carrier chrominance signal producing circuit (100) for producing a carrier chrominance signal from a difference signal generated from at least one of a one line difference and a one frame difference signal of a signal obtained by sampling a PAL color television signal with a sampling frequency equal to four times the frequency of the chrominance subcarrier and having a phase identical with the phase of the color burst, comprising a chrominance signal interpolation circuit (102) characterized by including means (111) for delaying said generated difference signal by one line period, means (112) for delaying said generated difference signal by one frame period, a mixing circuit (113) for combining the output signals of said two delay means in accordance with the movement of a picture, and a combining circuit (12) for alternately selecting at said sampling frequency either the output signal of said mixing circuit or the input signal of said two delay means, whereby missing pixels of the carrier chrominance signal at every other pixel occurring in said generated difference signal are interpolated.

4. A carrier chrominance signal producing circuit (100) according to Claim 1 or 3, comprising a circuit (3 and 5) for producing a one line difference signal from said signal obtained by sampling the PAL color television signal, a circuit (4 and 6) for producing a one frame difference signal from said signal obtained by sampling the PAL color television signal, a circuit (7 and 9) for mixing said one line difference signal and said one frame difference signal, and a movement detection circuit (8) for producing a signal which controls the mixture ratio in said circuit for mixing (7 and 9) from a part of said one frame difference signal.

5. A separation circuit for separating a luminance signal and a carrier chrominance signal from a signal obtained by sampling a PAL color television signal with a sampling frequency equal to four times the frequency of the chrominance subcarrier and having a phase identical with the phase of the color burst, comprising said carrier chrominance signal producing circuit (100) according to Claim 1, 2, 3 or 4, and an arithmetic circuit (15) for subtracting the output of said carrier chrominance signal producing circuit from said signal obtained by sampling a PAL color television signal to produce the luminance signal.

6. A carrier chrominance signal producing circuit (100) including a circuit (3 and 5) for producing a one line difference signal from a signal obtained by sampling a PAL color television signal with a sampling frequency equal to four times the frequency of the chrominance sub-carrier and having a phase identical with the phase of the color burst, a circuit (4 and 6) for producing a one frame difference signal from said signal obtained by sampling the PAL color television signal, a circuit (7 and 9) for mixing said one line difference signal and said one frame difference signal, and a movement detection circuit (8) for producing a signal which controls the mixture ratio in said mixing circuit from a part of said one frame difference signal, comprising a chrominance signal interpolation circuit (102) characterized by including an interpolation signal producing circuit (20) for delaying the outputted difference signal of said mixing circuit by at least one of one line scanning period or one frame period and a combining circuit (12) for alternately selecting at said sampling frequency either the input or the output signal of said interpolation signal producing circuit, whereby missing pixels of the carrier chrominance signal at every other pixel occurring in said outputted difference signal are interpolated.

**Patentansprüche**

1. Schaltung (100) zur Erzeugung eines Träger-Farbartsignals aus einem Differenzsignal, das aus einem Einzeilen- und/oder einem Einbild-Differenzsignal eines Signals stammt, das durch Abtasten eines PAL-Farbfernsehsignals mit einer Abtastfrequenz gewonnen ist, die das Vierfache der Frequenz des Farbart-Zwischenträgers beträgt und eine mit der Phase des Farb-Bursts übereinstimmende Phase aufweist, mit einer Farbartsignal-Interpolationsstufe (102), **gekennzeichnet** durch eine Verzögerungsstufe (20) zur Verzögerung des erzeugten Differenzsignals um eine Horizontal-Abtastperiode und eine Kombinationsstufe (12) zur abwechselnden Auswahl entweder des Eingangs- oder des Ausgangssignals der Verzögerungsstufe mit der besagten Abtastfrequenz, wodurch fehlende Pixel des Träger-Farbartsignals in jedem zweiten in dem erzeugten Differenzsignal auftretenden Pixel interpoliert werden.

2. Schaltung (100) zur Erzeugung eines Träger-Farbartsignals aus einem Differenzsignal, das aus einem Einzeilen- und/oder einem Einbild-Differenzsignal eines Signals stammt, das durch Abtasten eines PAL-Farbfernsehsignals mit einer Abtastfrequenz gewonnen ist, die das Vierfache der Frequenz des Farbart-Zwischenträgers beträgt und eine mit der Phase des Farb-Bursts übereinstimmende Phase aufweist, mit einer Farbartsignal-Interpolationsstufe (102), **gekennzeichnet** durch eine Verzögerungsstufe (20) zur Verzögerung des erzeugten Differenzsignals um eine Bildperiode und eine Kombinationsstufe (12) zur abwechselnden Auswahl entweder des Eingangs- oder des Ausgangssignals der Verzögerungsstufe mit der besagten Abtastfrequenz, wodurch fehlende Pixel des Träger-Farbartsignals in jedem zweiten in dem erzeugten Differenzsignal auftretenden Pixel interpoliert werden.

3. Schaltung (100) zur Erzeugung eines Träger-Farbartsignals aus einem Differenzsignal, das aus einem Einzeilen- und/oder einem Einbild-Differenzsignal eines Signals stammt, das durch Abtasten eines PAL-Farbfernsehsignals mit einer Abtastfrequenz gewonnen ist, die das Vierfache der Frequenz des Farbart-Zwischenträgers beträgt und eine mit der Phase des Farb-Bursts übereinstimmende Phase aufweist, mit einer Farbartsignal-Interpolationsstufe (102), **gekennzeichnet** durch eine Einrichtung (111) zur Verzögerung des erzeugten Differenzsignals um die Periode einer Zeile, eine Einrichtung (112) zur Verzögerung des erzeugten Differenzsignals um eine Bildperiode, eine Mischstufe (113) zum Kombinieren der Ausgangssignale der beiden Verzögerungseinrichtungen entsprechend der Bewegung eines Bildes, und eine Kombinationsstufe (12) zur abwechselnden Auswahl entweder des Ausgangssignals der Mischstufe oder des Eingangssignals der beiden Verzögerungseinrichtungen mit der besagten Abtastfrequenz, wodurch fehlende Pixel des Träger-Farbartsignals in jedem zweiten in dem erzeugten Differenzsignal auftretenden Pixel interpoliert werden.

4. Schaltung (100) zur Erzeugung eines Träger-Farbartsignals nach Anspruch 1 oder 3, mit einer Stufe (3 und 5) zur Erzeugung eines Einzeilen-Differenzsignals aus dem durch Abtasten des PAL-Farbfernsehsignals gewonnenen Signal, einer Stufe (4 und 6) zur Erzeugung eines Einbild-Differenzsignals aus dem durch Abtasten des PAL-Farbfernsehsignals gewonnenen Signal, einer Stufe (7 und 9) zum Mischen des Einzeilen-Differenzsignals und des Einbild-Differenzsignals, und eine Bewegungs-Erfassungsstufe (8) zur Erzeugung eines Signals, das das Mischverhältnis in der Mischstufe (7 und 9) aus einem Teil des Einbild-Differenzsignals steuert.

5.   Trennschaltung zum Abtrennen eines Leuchtdichtesignals und eines Träger-Farbartsignals aus einem Signal, das durch Abtasten eines PAL-Farbfernsehsignals mit einer Abtastfrequenz gewonnen ist, die das Vierfache der Frequenz des Farbart-Zwischenträgers beträgt und eine mit der Phase des Farb-Bursts übereinstimmende Phase aufweist, umfassend die Schaltung (100) zur Erzeugung des Träger-Farbartsignals nach einem der Ansprüche 1 bis 4 und eine Arithmetikstufe (15) zur Erzeugung des Leuchtdichtesignals durch Subtrahieren des Ausgangssignals der Schaltung zur Erzeugung des Träger-Farbartsignals von dem durch Abtasten eines PAL-Farbfernsehsignals gewonnenen Signal.

6.   Schaltung (100) zur Erzeugung eines Träger-Farbartsignals mit einer Stufe (3 und 5) zur Erzeugung eines Einzeilen-Differenzsignals aus einem Signal, das durch Abtasten des PAL-Farbfernsehsignals mit einer Abtastfrequenz gewonnen ist, die das Vierfache der Frequenz des Farbart-Zwischenträgers beträgt und eine mit der Phase des Farb-Bursts übereinstimmende Phase aufweist, einer Stufe (4 und 6) zur Erzeugung eines Einbild-Differenzsignals aus dem durch Abtasten des PAL-Farbfernsehsignals gewonnenen Signal, einer Stufe (7 und 9) zum Mischen des Einzeilen-Differenzsignals und des Einbild-Differenzsignals, und eine Bewegungs-Erfassungsstufe (8) zur Erzeugung eines Signals, das das Mischverhältnis in der Mischstufe (7 und 9) aus einem Teil des Einbild-Differenzsignals steuert, sowie mit einer Farbartsignal-Interpolationsstufe (102), **gekennzeichnet** durch eine Stufe (20) zur Erzeugung eines Interpolationssignals zur Verzögerung des von der Mischstufe ausgegebenen Differenzsignals um mindestens eine Zeilenabtastperiode und/oder eine Bildperiode, und eine Kombinationsstufe (12) zum abwechselnden Auswählen entweder des Eingangs- oder des Ausgangssignals der Interpolationssignal-Erzeugungsstufe mit der Abtastfrequenz, wodurch fehlende Pixel des Träger-Farbartsignals in jedem zweiten in dem ausgegebenen Differenzsignal auftretenden Pixel interpoliert werden.

## Revendications

1.   Circuit (100) de production d'un signal de chrominance de porteuse, pour produire un signal de chrominance de porteuse à partir d'un signal de différence produit à partir d'une différence d'une ligne et/ou d'un signal de différence d'une image d'un signal obtenu par échantillonnage d'un signal de télévision en couleurs PAL avec une fréquence d'échantillonnage égale au quadruple de la fréquence de la sous-porteuse de chrominance et possédant une phase identique à la phase de la salve couleurs, comprenant un circuit (102) d'interpolation de signal de chrominance, caractérisé en ce qu'il comprend des moyens de retardement (20) pour retarder, d'une période de balayage horizontal, ledit signal de différence produit et un circuit combinatoire (12) pour sélectionner alternativement, à ladite fréquence d'échantillonnage, soit le signal d'entrée, soit le signal de sortie desdits moyens de retardement, des pixels manquants du signal de chrominance de porteuse apparaissant tous les deux pixels dans ledit signal de différence produit étant interpolés.

2.   Circuit (100) de production d'un signal de chrominance de porteuse pour produire un signal de chrominance de porteuse à partir d'un signal de différence produit à partir d'une différence d'une ligne et/ou d'un signal de différence d'une image d'un signal obtenu par échantillonnage d'un signal de télévision en couleurs PAL avec une fréquence d'échantillonnage égale au quadruple de la fréquence de la sous-porteuse de chrominance et possédant une phase identique à la phase de la salve couleurs, comprenant un circuit (102) d'interpolation de signal de chrominance, caractérisé en ce qu'il comprend des moyens de retardement (20) pour retarder d'une période d'une image ledit signal de différence produit, et un circuit combinatoire (12) pour sélectionner alternativement, à ladite fréquence d'échantillonnage, le signal d'entrée ou le signal de sortie desdits moyens de retardement, des pixels manquants du signal de chrominance de porteuse apparaissant tous les deux pixels dans ledit signal de différence produit étant interpolés.

3.   Circuit (100) de production d'un signal de chrominance de porteuse, pour produire un signal de chrominance de porteuse à partir d'un signal de différence produit à partir d'une différence d'une ligne et/ou d'un signal de différence d'une image d'un signal obtenu par échantillonnage d'un signal de télévision en couleurs PAL avec une fréquence d'échantillonnage égale au quadruple de la fréquence de la sous-porteuse de chrominance et possédant une phase identique à la phase de la salve couleurs, comprenant un circuit (102) d'interpolation de signal de chrominance, caractérisé en ce qu'il comprend des moyens (111) pour retarder d'une période d'une ligne ledit signal de différence produit, des moyens (112) pour retarder d'une période d'une image ledit signal de différence produit, un circuit mélangeur (113) pour combiner les signaux de sortie desdits deux moyens de retardement en fonction du déplacement d'une image, et un circuit combinatoire (12) pour sélectionner alternativement, à ladite fréquence d'échantillonnage, le signal de sortie dudit circuit mélangeur ou le signal de sortie desdits deux moyens de retardement, des pixels manquants du signal de chrominance de porteuse apparaissant tous les deux pixels dans ledit signal de différence produit étant interpolés.

4. Circuit (100) de production d'un signal de chrominance selon la revendication 1 ou 3, comprenant un circuit (3 et 5) pour produire un signal de différence d'une ligne à partir dudit signal obtenu par échantillonnage du signal de télévision en couleurs PAL, un circuit (4 et 6) pour produire un signal de différence d'une image à partir dudit signal obtenu par échantillonnage du signal de télévision en couleurs PAL, un circuit (7 et 9) pour mélanger ledit signal de différence d'une ligne et ledit signal de différence d'une trame, et un circuit de détection de déplacement (8) pour produire un signal, qui commande le rapport de mélange dans ledit circuit de mélange (7 et 9) à partir d'une partie dudit signal de différence d'une image.

5. Circuit de séparation pour séparer un signal de luminance et un signal de chrominance de porteuse à partir du signal obtenu par échantillonnage d'un signal de télévision en couleurs PAL avec une fréquence d'échantillonnage égale au quadruple de la fréquence de la sous-porteuse de chrominance et possédant une phase identique à la phase de la salve couleurs, comprenant un circuit (100) de production de signal de chrominance selon la revendication 1, 2, 3 ou 4, un circuit arithmétique (15) pour soustraire le signal de sortie dudit circuit de production de signal de chrominance de porteuse, dudit signal obtenu par échantillonnage d'un signal de télévision en couleurs PAL, pour produire le signal de luminance.

6. Circuit (100) de production d'un signal de chrominance de porteuse comprenant un circuit (3 et 5) pour produire un signal de différence d'une ligne à partir dudit signal obtenu par échantillonnage du signal de télévision en couleurs PAL, un circuit (4 et 6) pour produire un signal de différence d'une image à partir dudit signal obtenu par échantillonnage du signal de télévision en couleurs PAL, un circuit (7 et 9) pour mélanger ledit signal de différence d'une ligne et ledit signal de différence d'une image, et un circuit de détection de déplacement (8) pour produire un signal, qui commande le rapport de mélange dans ledit circuit de mélange à partir d'une partie dudit signal de différence d'une image, comprenant un circuit (102) d'interpolation de signal de chrominance, caractérisé en ce qu'il comporte un circuit (20) de production de signal d'interpolation pour retarder, d'au moins une période de balayage d'une ligne ou d'une période d'une image le signal de différence délivré dudit circuit de mélange, et un circuit combinatoire (12) pour sélectionner alternativement, à ladite fréquence d'échantillonnage, le signal de sortie ou le signal d'entrée dudit circuit de production de signal d'interpolation, des pixels manquants du signal de chrominance de porteuse apparaissant tous les deux pixels dans ledit signal de différence délivré étant interpolés.

# FIG. 1
## PRIOR ART

5, 6, 15 --- ARITHMETIC CIRCUIT

EP 0 430 049 B1

# F I G. 2

LINE DIFFERENCE SIGNAL DL

e : EDGE SIGNAL

CL: C SIGNAL BY LINE DIFFERENCE

FRAME DIFFERENCE SIGNAL DF

M : MOVEMENT SIGNAL

CF: C SIGNAL BY FRAME DIFFERENCE

MIXED SIGNAL DM

$CM = k \cdot CL + (1 - k) \cdot CF$

k : MOVEMENT CONTROL SIGNAL

HATCHED PORTION : RANDOM
(MEANING LESS)
SIGNAL

# FIG. 3

EP 0 430 049 B1

5, 6, 15 --- ARITHMETIC CIRCUIT

# FIG. 4

# FIG. 5

EP 0 430 049 B1

5,6,15---ARITHMETIC CIRCUIT

FIG. 6

DELAY CIRCUIT 14

SAMPLING 2

4 fsc

1

IH MEMORY 3

IF MEMORY 4

5 DL

6 DF

(-)

(-)

DISTRIBUTION CIRCUIT 7

e

CL

CF

M

MIXING CIRCUIT 9

DMI

MOVEMENT PROCESSING 8

k

INTERPOLATION SIGNAL PRODUCING CIRCUIT

20

IH MEMORY 111

IF MEMORY 112

Ch

Cg

MIXING CIRCUIT 113

CI

15

(-)

Y 16

a

b

12 COMBINING CIRCUIT

C 13

102

CARRIER CHROMINACE SIGNAL INTERPOLATION CIRCUIT

100

101

EP 0 430 049 B1